# EUROPÄISCHE PATENTANMELDUNG

(11) **EP 4 552 461 A1**
(43) Veröffentlichungstag der Anmeldung: **14.05.2025**
(21) Anmeldenummer: 24210489.1
(22) Anmeldetag: 04.11.2024
(51) Int. Cl.: A01C 7/08

(54) **FÖRDERSYSTEM, VERFAHREN ZUM FÖRDERN VON GRANULAREM MATERIAL SOWIE LANDWIRTSCHAFTLICHE VERTEILMASCHINE**

(30) Priorität: 10.11.2023 DE 102023131227
(71) Anmelder: Horsch Maschinen GmbH, 92421 Schwandorf (DE)
(72) Erfinder: Erhard, Manfred, 92421 Schwandorf (DE); Waiz, Markus, 92421 Schwandorf (DE)
(74) Vertreter: v. Bezold & Partner Patentanwälte - PartG mbB

(57) **Zusammenfassung**

Die Erfindung betrifft ein Fördersystem (50) zum Fördern von auf einer landwirtschaftlichen Fläche auszubringendem granularem Material, mit einem Vorratsbehälter (24) für das granulare Material sowie mit einem Leitungssystem (60), zum pneumatischen Fördern von dem aus dem Vorratsbehälter (24) entnommenem granularem Material zu Ausbringeinrichtungen (22), wobei das Leitungssystem (60) mit einer Strömungserzeugungseinrichtung (70), die zur Erzeugung einer Zuführluftströmung in dem Leitungssystem (60) eingerichtet ist, wirkverbunden ist. Zur Vermeidung von Verstopfungen im Leitungssystem sieht die Erfindung vor, dass das Leitungssystem (60) eine Ventileinrichtung (120) umfasst, die eingerichtet ist, die Zuführluftströmung temporär zu manipulieren.

Die Erfindung betrifft zudem ein Verfahren zum Fördern von auf einer landwirtschaftlichen Fläche auszubringendem granularem Material, sowie eine landwirtschaftliche Verteilmaschine.

## Beschreibung

Die Erfindung betrifft ein Fördersystem zum Fördern von auf einer landwirtschaftlichen Fläche auszubringendem granularem Material. Zudem betrifft die Erfindung ein Verfahren zum Fördern von auf einer landwirtschaftlichen Fläche auszubringendem granularem Material. Darüber hinaus betrifft die Erfindung eine landwirtschaftliche Verteilmaschine, insbesondere eine Sämaschine und/oder einen pneumatischen Düngerstreuer.

Im Bereich der Landtechnik sind zur Verteilung von granularem Material wie Saatgut, Dünger oder dergl. Verteilmaschinen wie bspw. Sämaschinen (z.B. Einzelkornsämaschine, Drillmaschine oder dergl.), Düngerstreuer (z.B. pneumatischer Düngerstreuer) oder dergl., mit einem Vorratsbehälter für das auszubringende Material und Ausbringeinrichtungen zur Verteilung des Materials auf einer landwirtschaftlichen Fläche bekannt. Zum Fördern des Materials vom Vorratsbehälter zu den Ausbringeinrichtungen ist in der Regel ein Leitungssystem vorgesehen, welches mit einer Strömungserzeugungseinrichtung, die zur Erzeugung einer Zuführluftströmung in dem Leitungssystem eingerichtet ist, wirkverbunden ist, wodurch die Verteilmaschinen somit jeweils ein pneumatisches Fördersystem aufweisen.

Verteilmaschinen mit einem pneumatischen Fördersystem wurden aus dem Stand der Technik u.a. bekannt durch die WO 2010 144 801 A1, EP 2 854 500 A1 und werden auch als sog. Seed-on-Demand-Systeme bezeichnet.

Nachteilig an den aus dem Stand der Technik bekannten Fördersystemen, respektive Seed-on-Demand-Systemen, ist jedoch die jeweilige Auslegung der Dimensionierung der Leitungssysteme. Die Leitungssysteme müssen zum einen groß genug sein, um die gewünschte Menge an jeweiligem Material fördern zu können, müssen zum anderen jedoch auch derartig klein sein, dass in diesen eine ausreichend hohe Strömungsgeschwindigkeit der Zuführluftströmung vorhanden ist, um somit Verstopfungen zu vermeiden. Da die Verteilmaschinen jeweils als mobile Arbeitsmaschinen ausgeführt sind, ist zudem jeweils die zur Verfügung stehende Energiemenge begrenzt, so dass eine Erhöhung der Strömungsgeschwindigkeit der Zuführluftströmung nur in begrenzter Art und Weise möglich ist.

Problematisch ist darüber hinaus auch die Verlegung der das Leitungssystem bildenden Leitungen innerhalb der Verteilmaschinen, da bspw. durch eingesetzte Rohrbögen, Anschlussstutzen der Ausbringeinrichtungen, Leitungsverjüngungen oder dergl. wiederum die Zuführluftströmung negativ beeinflusst wird. Insbesondere kann sich in derartigen Leitungssystemen an verschiedensten stellen Material aufbauen, welches wiederum zu Verstopfungen in dem Leitungssystem führen kann.

Aufgabe der Erfindung ist es somit, die beschriebenen Nachteile des Standes der Technik zu beseitigen. Insbesondere soll ein pneumatisches Fördersystem, bevorzugt eine landwirtschaftliche Verteilmaschine mit einem pneumatischen Fördersystem geschaffen werden, bei welchem eine Anfälligkeit gegenüber von Verstopfungen verringert wird.

Diese Aufgaben werden gelöst durch ein Fördersystem mit den Merkmalen des unabhängigen Anspruch 1, durch ein Verfahren zum Fördern von granularem Material mit den Merkmalen des Verfahrensanspruch 12, sowie durch eine landwirtschaftliche Verteilmaschine mit den Merkmalen des Anspruchs 14. Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird ein Fördersystem zum Fördern von auf einer landwirtschaftlichen Fläche auszubringendem (d.h. zu verteilendem) granularem Material wie bspw. Saatgut, Dünger oder dergl. bereitgestellt.

Das Fördersystem umfasst einen Vorratsbehälter für das granulare Material, sowie ein Leitungssystem, welches mittels einer Zuführluftströmung zum pneumatischen Fördern von dem aus dem Vorratsbehälter entnommenem granularem Material zu Ausbringeinrichtungen eingerichtet ist. Das Leitungssystem ist mit einer Strömungserzeugungseinrichtung, die zur Erzeugung der Zuführluftströmung in dem Leitungssystem eingerichtet ist, wirkverbunden.

Zur Schaffung eines pneumatisches Fördersystem, bevorzugt zur Schaffung einer landwirtschaftlichen Verteilmaschine mit einem pneumatischen Fördersystem, bei welchem eine Anfälligkeit gegenüber von Verstopfungen verringert wird, ist erfindungsgemäß vorgesehen, dass das Leitungssystem eine Ventileinrichtung umfasst, die eingerichtet ist, die Zuführluftströmung temporär zu manipulieren.

Die Erfindung macht sich die Erkenntnis zu Nutze, dass durch eine temporäre Manipulation der Zuführluftströmung eine gezielte, insbesondere kurzzeitige, Erhöhung und/oder Verringerung des Druckniveaus, insbesondere des statischen Druckniveau im Leitungssystem erreicht wird, wodurch bspw. Verstopfungen unterbrochen, respektive durchbrochen, werden können und/oder Anhaftungen sich lösen können. Insbesondere kann durch die temporäre Manipulation der Zuführluftströmung die maximal durch das Leitungssystem förderbare Menge an Material erhöht werden, da die Anfälligkeit, insbesondere die Gefahr, von Verstopfungen wesentlich verringert ist.

Im Kontext der Erfindung umfasst das Leitungssystem insbesondere jegliche Komponenten und/oder Bauteile, durch welche die Zuführluftströmung strömt, dementsprechend jegliche Leitungen, Rohrbögen, Strömungserzeugungseinrichtungen, Entnahmeeinrichtungen, Dosiereinrichtungen und/oder dergl.

Im Kontext der Erfindung sind die Ausbringeinrichtungen bspw. durch Säschare mit Saatrohren, Prallelemente und/oder dergl. gebildet. Können jedoch durch jegliches Element gebildet sein mittels welchem eine Ausbringung von granularem Material auf einer Bodenfläche ermöglicht ist.

Gemäß einer Ausführungsvariante der Erfindung ist vorgesehen, dass die Ventileinrichtung zur temporären Manipulation der Zuführluftströmung dazu eingerichtet ist, die Zuführluftströmung temporär zu unterbrechen. Bevorzugt kann eine temporäre Unterbrechung eine zumindest nahezu vollständige oder vollständige temporäre Unterbrechung der Zuführluftströmung umfassen.

Alternativ oder ergänzend ist es möglich, dass die Ventileinrichtung zur temporären Manipulation der Zuführluftströmung dazu eingerichtet ist, den Querschnitt im Leitungssystem zumindest abschnittweise um mindestens 50% oder um mindestes 75% oder um mindestens 90% zu reduzieren.

Bevorzugt ist die Ventileinrichtung als eine Drossel, respektive ein Drosselventil, ausgeführt, insbesondere als eine mittels einer Steuereinrichtung steuer- und/oder regelbare Drossel ausgeführt.

Die Ventileinrichtung kann bspw. durch ein Absperrventil, ein Kugelventil, ein Regelventil, ein Begrenzungsventil oder dergl. gebildet sein. Insbesondere kann die Ventileinrichtung eine Klappe, einen Schieber, eine Membran, eine Kugel oder dergl. aufweisen. Gemäß einer bevorzugten Ausführungsvariante kann die Ventileinrichtung mittels einer Steuereinrichtung steuer- und/oder regelbar sein.

Gemäß einer Weiterbildung der Erfindung kann vorgesehen sein, dass die temporäre Unterbrechung mittels einer Gegenluftströmung in dem Leitungssystem erzeugt wird, welche Genluftströmung mittels der Ventileinrichtung steuerbar und/oder regelbar ist. Insbesondere kann vorgesehen sein, dass die Ventileinrichtung eingerichtet ist, eine quer und/oder entgegengesetzt zur Zuführluftströmung orientierte Gegenluftströmung in dem Leitungssystem zu erzeugen und entsprechend die Zuführluftströmung temporär zu manipulieren.

Gemäß einer bevorzugten Ausführungsvariante ist die Ventileinrichtung zu einer derartigen temporären Manipulation der Zuführluftströmung eingerichtet, dass z.B. bei einer Unterbrechung der Zuführluftströmung und/oder einer Reduktion des Querschnittes im Leitungssystem, in dem Leitungssystem das statische Druckniveau temporär erhöht wird, das dynamische Druckniveau temporär verringert wird und der Totaldruck zumindest annähernd konstant bleibt.

Ein erfindungsgemäßes temporäres Manipulieren der Zuführluftströmung kann im Kontext der Erfindung insbesondere einen zumindest kurzzeitigen Abriss der Zuführluftströmung in dem Leitungssystem auslösen.

Eine bevorzugte Weiterbildung des Fördersystems kann vorsehen, dass die temporäre Manipulation in einem definierten und/oder definierbaren Zeitintervall (z.B. Zeitabstand wie häufig eine temporäre Manipulation erfolgt) erfolgt. Bevorzugt ist der Zeitinterwall durch einen Zeitabstand definiert, wie häufig eine temporäre Manipulation der Zuführluftströmung in dem Leitungssystem erfolgt. Insbesondere kann durch eine derartige Ausführung der Gefahr von Ablagerungen von Material reduziert werden.

Alternativ oder ergänzend kann vorgesehen sein, dass die temporäre Manipulation durch eine manuelle Vorgabe erfolgt. Bevorzugt ist die manuelle Vorgabe durch eine bspw. ferngesteuerte Betätigung der Ventileinrichtung durch eine Bedienperson definiert. Insbesondere kann durch eine derartige Ausführung eine Bedienperson gezielt die Ventileinrichtung betätigen, wenn dies bspw. erforderlich ist.

Alternativ oder ergänzend kann vorgesehen sein, dass die temporäre Manipulation Anhand von, vorzugsweise durch eine Erfassungseinrichtung vorgegebener (z.B. sensorisch erfasster und/oder ortsabhängiger), Betriebsdaten erfolgt. Insbesondere kann durch eine derartige Ausführung die temporäre Manipulation nur dann erfolgen, wenn diese unbedingt erforderlich ist und/oder wenn kein Fördern von Material stattfindet.

Zur Schaffung eines Fördersystem mittels welchem auf verschiedenste Betriebsdaten reagiert werden kann, ist es möglich, dass die Betriebsdaten definiert sind durch eine geförderte Menge an granularem Material und/oder einen Betriebszustand der Ausbringeinrichtungen und/oder eine Lage einer das Fördersystem aufweisenden Verteilmaschine auf einer landwirtschaftlichen Fläche. Dementsprechend kann die Erfassungseinrichtung eingerichtet sein, vorzugsweise sensorisch zu erfassen und/oder signaltechnisch zu verarbeiten, ob durch das Leitungssystem granulares Material gefördert wird und/oder ober mittels der Ausbringeinrichtungen eine Verteilung von granularem Material erfolgt und/oder welche Position (z.B. Ortslage erfasst mittels eines Positionsbestimmungssystem (z.B. GPS-System)), die das Fördersystem aufweisende Verteilmaschine auf einer landwirtschaftlichen Fläche aufweist. Die Erfassungseinrichtung kann Bestandteil der Steuereinrichtung sein und bspw. durch einen oder mehrere Sensoren, Positionsbestimmungssysteme, und/oder dergl. gebildet sein.

Um sowohl die Anfälligkeit gegenüber Verstopfungen zu verringern, jedoch auch eine dauerhafte Förderung des granularen Materials im Leitungssystem sicher zu stellen, ist es gemäß einer Weiterbildung der Erfindung möglich, dass die temporäre Manipulation in einer maximalen Zeitdauer von 2 Sekunden oder maximal 5 Sekunden oder maximal 20 Sekunden erfolgt. Die Zeitdauer kann bevorzugt durch einen Zeitraum definiert sein, in der die Zuführluftströmung durch die Ventileinrichtung in einer beliebigen Art und Weise manipuliert wird. Insbesondere ist es möglich, dass die Zeitdauer veränderbar ist, bspw. durch eine Bedienperson veränderbar ist. Bevorzugt kann das Verändern der Zeitdauer innerhalb einer vorgebbaren Zeitdauer erfolgen, so dass bspw. eine Zeitdauer in das Fördern des granularen Materials negativ beeinflusst wird, nicht überschritten wird.

Gemäß einer weiteren Ausführungsvariante kann das Fördersystem durch eine Sensoreinrichtung gekennzeichnet sein, wobei die Sensoreinrichtung zur mittelbaren und/oder unmittelbaren Erfassung eines Druckniveau der Zuführluftströmung und/oder einer Strömungsgeschwindigkeit der Zuführluftströmung in dem Leitungssystem eingerichtet ist. Darüber hinaus kann eine Steuereinrichtung vorgesehen sein, die eingerichtet ist, die Ventileinrichtung anhand des erfassten Druckniveau und/oder der erfassten Strömungsgeschwindigkeit zu steuern und/oder zu regeln. Die Erfassungseinrichtung kann bevorzugt durch einen oder mehrere Drucksensoren, Strömungssensoren und/oder dergl. gebildet sein. Durch die Erfassung des Druckniveau und/oder der Strömungsgeschwindigkeit kann somit bspw. eine Verstopfung und/oder eine Verengung durch bspw. granulares Material in dem Leitungssystem detektiert werden und entsprechend durch eine temporäre Manipulation der Zuführluftströmung dieser Verstopfung und/oder Verengung entgegengewirkt werden.

Zur Sicherstellung eines dauerhaften störungsfreien pneumatischen Förderns des granularen Materials ist es gemäß einer Weiterbildung der Erfindung möglich, dass die Strömungserzeugungseinrichtung eingerichtet ist, eine Strömungsgeschwindigkeit der Zuführluftströmung und/oder ein Druckniveau der Zuführluftströmung in dem Leitungssystem zu steuern und/oder zu regeln. Insbesondere erfolgt ein Steuern und/oder Regeln unabhängig von der temporären Manipulation der Zuführluftströmung. Bevorzugt ist die Strömungserzeugungseinrichtung durch zumindest ein oder mehrere Gebläse (z.B. Radialgebläse, Zentrifugalgebläse oder dergl.) gebildet, die zum Steuern und/oder Regeln jeweils mit einer variablen Antriebsdrehzahl betrieben werden können, wobei bevorzugt die Drehzahl, unabhängig von der temporären Manipulation der Zuführluftströmung mittels der Ventileinrichtung, unverändert bleibt. Insbesondere ist die Steuereinrichtung eingerichtet, zur temporären Manipulation der Zuführluftströmung ausschließlich die Ventileinrichtung zu steuern und/oder zu regeln.

Wobei gemäß einer Weiterbildung zusätzlich zur Manipulation der Zuführluftströmung mittels der Ventileinrichtung auch eine Manipulation mittels der Strömungserzeugungseinrichtung denkbar wäre. Gemäß einer alternativen oder ergänzenden Ausführungsvariante ist es denkbar, dass die durch die Strömungserzeugungseinrichtung bereitgestellte Zuführluftströmung, d.h. die Strömungsgeschwindigkeit und/oder das Druckniveau, reduziert wird, sobald eine temporäre Manipulation der Zuführluftströmung mittels der Ventileinrichtung ausgeführt wird.

Um das Fördersystem an einer landwirtschaftlichen Verteilmaschine mit einem Vorratsbehälter einsetzen zu können, ist es gemäß einer Ausführungsvariante des Fördersystem möglich, dass dem Leitungssystem zur Entnahme des granularen Materials eine Entnahmeeinrichtung zugeordnet ist, wobei zwischen der Strömungserzeugungseinrichtung und der Entnahmeeinrichtung einer erster Leitungsabschnitt vorgesehen ist und wobei zwischen der Entnahmeeinrichtung und der Ausbringeinrichtung ein zweiter Leitungsabschnitt vorgesehen ist. Zudem kann vorgesehen sein, dass dem zweiten Leitungsabschnitt zumindest eine Dosiereinrichtung, insbesondere eine Einzelkorndosiereinrichtung, zugeordnet ist. Insbesondere können mehrere zweite Leitungsabschnitte mit Dosiereinrichtungen vorgesehen sein.

Gemäß einer bevorzugten Weiterbildung kann vorgesehen sein, dass der erste Leitungsabschnitt einen zumindest um das Doppelte, bevorzugt einen zumindest um das Dreifache, größeren Querschnitt aufweist als der zweite Leitungsabschnitt. Beispielsweise kann der erste Leitungsabschnitt einen Durchmesser von 100mm oder 150m aufweisen, sowie der zweite Leitungsabschnitt bspw. einen Durchmesser von 25mm oder 32mm oder 50mm aufweisen.

Eine vorteilhafte Anordnung der Ventileinrichtung kann erreicht werden indem bspw. die Ventileinrichtung dem ersten Leitungsabschnitt zugeordnet ist und/oder indem die Ventileinrichtung dem zweiten Leitungsabschnitt zugeordnet ist.

Insbesondere ist es möglich, dass die Ventileinrichtung im Leitungssystem, insbesondere einem jeweiligen Leitungsabschnitt sowohl in dessen Verlauf zugeordnet ist und/oder dessen jeweiligen Anfangs- und/oder Endbereich zugeordnet ist.

Eine Ausführungsvariante des Fördersystem kann eine Mehrzahl von Ausbringeinrichtungen und/oder Dosiereinrichtungen vorsehen, um diese jeweils mit einem Fördersystem mit granularem Material versorgen zu können, ist es gemäß einer bevorzugten Weiterbildung der Erfindung möglich, dass zwischen dem ersten Leitungsabschnitt und dem zweiten Leitungsabschnitt und/oder der Entnahmeeinrichtung ein Strömungsteiler vorgesehen ist, der eingerichtet ist, die Zuführluftströmung des ersten Leitungsabschnitt in eine, der Anzahl an zweiten Leitungsabschnitten entsprechende Anzahl an Zuführluftströmungen aufzuteilen. Der Strömungsteiler kann zweckmäßig insbesondere unmittelbar vor und/oder unmittelbar nach der Entnahmeeinrichtung angeordnet sein.

Insofern das Leitungssystem mehrere erste Leitungsabschnitte und/oder mehrere zweite Leitungsabschnitte umfasst, kann vorgesehen sein, dass jedem ersten Leitungsabschnitt und/oder jedem zweiten Leitungsabschnitt eine Ventileinrichtung zugeordnet ist.

Das Fördersystem kann insbesondere ein Seed-on-Demand System bilden. Derartige Seed-on-Demand Systeme werden mitunter auch als Seed-Nursing-System bezeichnet. Insbesondere erfolgt mittels des erfindungsgemäßen Seed-on-Demand-Systems, ein kontinuierliches (z.B. bedarfs geregeltes) Nachfüllen von granularem Material aus dem Vorratsbehälters zu den Ausbringeinrichtungen, respektive zu den Ausbringeinrichtungen vorgelagerten Dosiereinrichtungen. Wobei jeweils eine Zuführluftströmung (z.B. im zweiten Leitungsabschnitt) in Abhängigkeit eines Füllstand an einem Zwischenbehälter der Ausbringeinrichtung, respektive an einem Zwischenbehälter der den Ausbringeinrichtungen vorgelagerten Dosiereinrichtung, ohne zusätzliche Steuereinrichtungen, Ventile oder dergl. erzeugt wird oder nicht, und wiederum in Abhängigkeit des Vorhandenseins der Zuführluftströmung granulares Material gefördert wird oder nicht.

Die Entnahmeeinrichtung kann bspw. durch eine Zellenradschleuse gebildet sein und/oder durch eine sog. Seed-on-Demand Förderbox gebildet sein.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Im Kontext der Erfindung kann es sich bei allen, zu den vorliegenden Ausführungsvarianten beschriebenen, Steuereinrichtungen um die gleiche Steuereinrichtung handeln, insbesondere um eine Zentrale Steuereinrichtung. Wobei die Steuereinrichtung insbesondere eine oder mehrere Rechnereinheiten mit einem jeweiligen Steuerungs- und/oder Regelungsprogramm umfassen kann.

Gemäß einem weiteren Aspekt der Erfindung wird ein Verfahren zum Fördern von auf einer landwirtschaftlichen Fläche auszubringendem granularem Material zur Verfügung gestellt.

Das Verfahren umfasst ein pneumatisches Fördern von aus einem Vorratsbehälter entnommenem granularem Material zu Ausbringeinrichtungen über ein Leitungssystem, wobei das Leitungssystem mit einer Strömungserzeugungseinrichtung, die zur Erzeugung einer Zuführluftströmung, zum pneumatischen Fördern des granularen Materials in dem Leitungssystem, eingerichtet ist, wirkverbunden ist.

Das Verfahren ist gekennzeichnet durch ein temporäres Manipulieren der Zuführluftströmung in dem Leitungssystem mittels einer dem Leitungssystem zugeordneten Ventileinrichtung.

Bevorzugt ist das Verfahren mit einem Fördersystem gemäß der vorliegenden Beschreibung ausführbar.

Eine Ausführungsvariante des Verfahrens kann ein derartiges temporäres, insbesondere kurzzeitiges, manipulieren der Zuführluftströmung umfassen, dass eine Erhöhung eines Druckniveaus, insbesondere eines statischen Druckniveaus in zumindest einem Abschnitt des Leitungssystem erfolgt, wodurch insbesondere Verstopfungen durchbrochen werden.

Eine alternative oder ergänzende Ausführungsvariante des Verfahrens kann ein derartiges temporäres, insbesondere kurzzeitiges, manipulieren der Zuführluftströmung umfassen, dass eine Verringerung eines Druckniveaus, insbesondere eines statischen Druckniveaus, in zumindest einem Abschnitt des Leitungssystem erfolgt, wodurch insbesondere Anhaftungen gelöst werden.

Gemäß einem weiteren Aspekt der Erfindung wird eine landwirtschaftliche Verteilmaschine, insbesondere eine Sämaschine (z.B. Einzelkornsämaschine) und/oder ein pneumatischer Düngerstreuer bereitgestellt.

Die Verteilmaschine weist insbesondere ein Fördersystem gemäß der vorliegenden Beschreibung auf. Alternativ oder ergänzend ist die Verteilmaschine insbesondere eingerichtet, ein Verfahren gemäß der vorliegenden Beschreibung auszuführen.

Gemäß einer Weiterbildung der Verteilmaschine wäre es denkbar, dass diese zumindest zwei identische oder unterschiedliche pneumatische Fördersysteme aufweist, wobei zumindest einem Fördersystem eine Ventileinrichtung zur temporären Manipulation der Zuführluftströmung zugeordnet sein kann und/oder wobei zumindest ein Fördersystem als sog. Seed-on-Demand-System ausgeführt sein kann.

Zur Vermeidung von Wiederholungen sei darauf hingewiesen, dass die erfindungsgemäßen Ausführungsformen und Merkmale in beliebiger Weise und Frei mit dem Fördersystem, dem Verfahren zum Fördern und/oder der Verteilmaschine kombinierbar sind. Dementsprechend sind alle Ausführungsformen und erfindungsgemäßen Merkmale sowohl für das Fördersystem, als auch für das Verfahren zum Fördern, als auch für die Verteilmaschine offenbart und in beliebiger Art und Weise beanspruchbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine perspektive Ansicht einer Ausführungsvariante einer landwirtschaftlichen Verteilmaschine mit einem erfindungsgemäßen Fördersystem,
- Figur 2A: eine Prinzipskizze einer Ausführungsvariante eines erfindungsgemäßen Fördersystem mit einer geöffneten Ventileinrichtung,
- Figur 2B: eine Prinzipskizze einer Ausführungsvariante des Fördersystem gemäß der Figur 2A mit einer geschlossenen Ventileinrichtung,
- Figur 2C: eine alternative Prinzipskizze einer Ausführungsvariante eines erfindungsgemäßen Fördersystem gemäß der Figur 2A mit einem alternativen ersten Leitungsabschnitt mit einer geöffneten Ventileinrichtung,
- Figur 2D: eine Prinzipskizze des Fördersystem gemäßer der Figur 2C mit einer geschlossenen Ventileinrichtung,
- Figur 3: eine Seitenansicht einer alternativen Ausführungsvariante einer landwirtschaftlichen Verteilmaschine mit einer Ausführungsvariante eines erfindungsgemäßen Fördersystem.

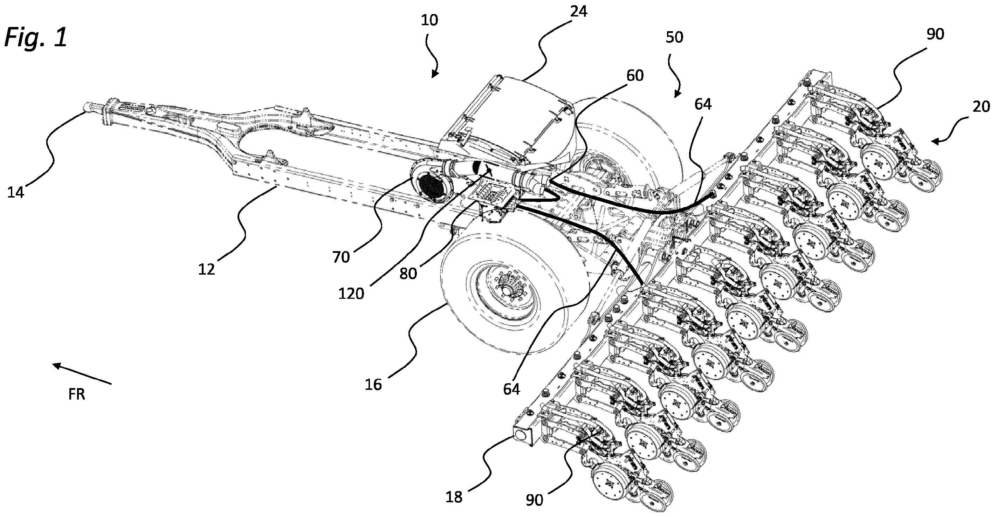

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Es sei darauf hingewiesen, dass in den Figuren 1 bis 3 die Zuführluftströmung jeweils durch Pfeile in den jeweiligen Leitungssystemen (60), respektive Leitungsabschnitten (60; 62) schematisch dargestellt sind.

Figur 1 zeigt in einer perspektiven Ansicht eine Ausführungsvariante einer landwirtschaftlichen Verteilmaschine 10. Die Verteilmaschine 10 ist als Sämaschine in Form einer Einzelkornsämaschine ausgebildet und dient zweckmäßig zur vereinzelten Abgabe von granularem landwirtschaftlichem Material (z.B. Saatgut). Die Verteilmaschine 10 umfasst insbesondere eine Fördersystem 50 gemäß der vorliegenden Beschreibung und/oder ist eingerichtet ein Verfahren gemäß der vorliegenden Beschreibung auszuführen.

Die Verteilmaschine 10 umfasst eine Rahmenkonstruktion 12 mit einer Verbindungseinrichtung 14, zur Verbindung der Verteilmaschine 10 mit einer hier nicht dargestellten Zugmaschine (z.B. Traktor) und mit einem Fahrwerk 16. Die Rahmenkonstruktion 12 umfasst zudem in einem hinteren Bereich einen sich in großer Breite quer zur Fahrtrichtung FR erstreckenden Querträger 18, an welchem eine Vielzahl, zum Beispiel 9, Reiheneinheiten 20, die als Ausbringeinrichtung 22 dienen, angeordnet sind. Die Reiheneinheiten 20, respektive die Ausbringeinrichtungen 22, sind jeweils als Säschare ausgeführt, wobei wiederum den Säscharen jeweils eine als Ausbringeinrichtung 22 dienende Dosiereinrichtung 90 mit Saatrohr zugeordnet ist.

Zum Mitführen und Bereitstellen von auf einer landwirtschaftlichen Fläche (z.B. Ackerfläche) auszubringendem granularem Material (z.B. Saatgut, Dünger oder dergl.) umfasst die Verteilmaschine 10 zudem einen Vorratsbehälter 24, welcher bspw. als zentraler Vorratsbehälter 24 ausgeführt ist.

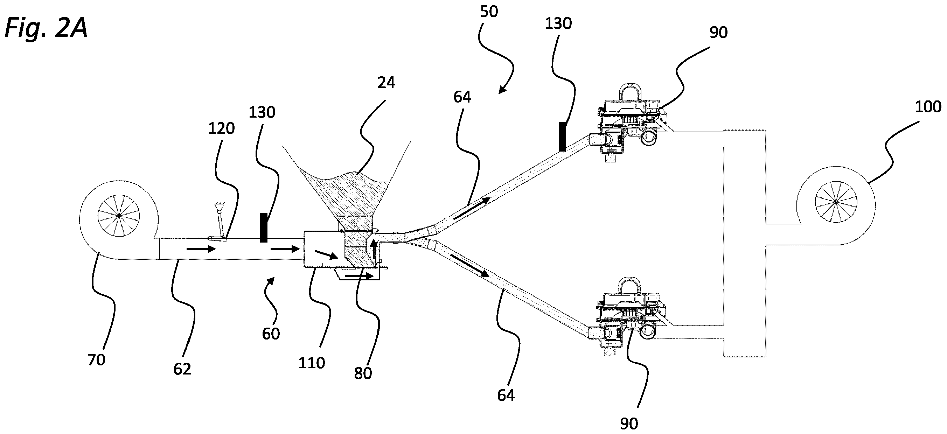

Eine Ausführungsvariante eines Fördersystem 50 geht aus den schematischen Ansichten der Figuren 2A bis 2D hervor. Das Fördersystem 50 dient zum Fördern von auf einer landwirtschaftlichen Fläche auszubringenden granularem Material. Das Fördersystem 50 ist als ein Seed-on-Demand System ausgebildet. Bei dem Seed-on-Demand-System erfolgt ein kontinuierliches Nachfüllen von granularem Material aus dem Vorratsbehälter 24 zu den Ausbringeinrichtungen 22, respektive zu den Ausbringeinrichtungen 22 vorgelagerten Dosiereinrichtungen 90. Wobei jeweils eine Zuführluftströmung (z.B. im zweiten Leitungsabschnitt 64) in Abhängigkeit eines Füllstand an einem Zwischenbehälter der Ausbringeinrichtung 22, respektive an einem Zwischenbehälter der den Ausbringeinrichtungen 22 vorgelagerten Dosiereinrichtung 90, erzeugt wird oder nicht, und wiederum in Abhängigkeit des Vorhandenseins der Zuführluftströmung granulares Material gefördert wird oder nicht.

Das Fördersystem 50 umfasst einen Vorratsbehälter 24 für das granulare Material, sowie ein Leitungssystem 60 zum pneumatischen Fördern von dem aus dem Vorratsbehälter 24 entnommenem granularem Material zu Ausbringeinrichtungen 22. Zur Erzeugung einer Zuführluftströmung, zum pneumatischen Fördern des granularen Materials in dem Leitungssystem 60, ist eine mit dem Leitungssystem 60 wirkverbundene Strömungserzeugungseinrichtung 70 vorgesehen. Wobei die Strömungserzeugungseinrichtung 60 insbesondere durch ein, mit einer steuer- und/oder regelbaren Drehzahl betreibbares, Gebläse gebildet ist.

Zur Entnahme von granularem Material aus dem Vorratsbehälter 24 ist eine Entnahmeeinrichtung 80 vorgesehen. Wobei die Entnahmeeinrichtung 80 insbesondere als eine Seed-on-Demand Box ausgebildet ist, alternativ oder ergänzend aber auch als Zellenradschleuse oder dergl. ausgebildet sein könnte.

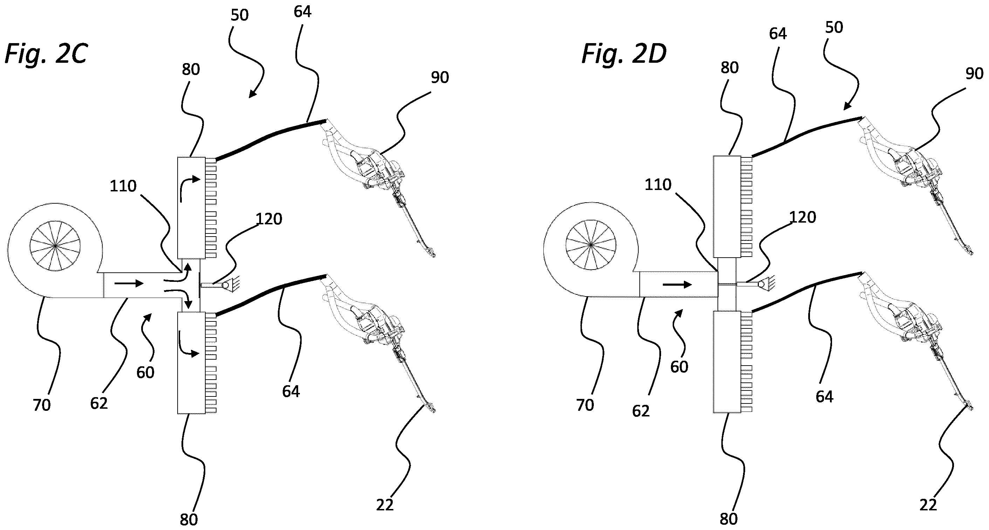

Zwischen der Strömungserzeugungseinrichtung 70 und der Entnahmeeinrichtung 80, ist ein erster Leitungsabschnitt 62 vorgesehen, zudem ist zwischen der Entnahmeeinrichtung 80 und der Ausbringeinrichtung 22 (siehe Figur 2C und 2D) eine zweiter Leitungsabschnitt 64 vorgesehen, wobei wiederum dem zweiten Leitungsabschnitt 64 eine Dosiereinrichtung 90 zugeordnet ist.

Die Dosiereinrichtung 90 ist insbesondere als eine Einzelkorndosiereinrichtung ausgebildet, bevorzugt als eine Differenzdruck-Einzelkorndosiereinrichtung, wobei zur Erzeugung des Differenzdruck (z.B. Überdruck oder Unterdruck) die jeweilige Dosiereinrichtung 90 mit einer zusätzlichen Druckerzeugungseinrichtung 100 wirkverbunden ist. Es wäre jedoch auch möglich, dass zur Erzeugung des Differenzdruck ebenso die Strömungserzeugungseinrichtung 70 eingesetzt wird.

Der erste Leitungsabschnitt 62 weist einen zumindest um das Doppelte, bevorzugt einen zumindest um das Dreifache, größeren Querschnitt auf als der zweite Leitungsabschnitt 64.

Zwischen dem ersten Leitungsabschnitt 62 und der Entnahmeeinrichtung 80 ist ein Strömungsteiler 110 vorgesehen, der eingerichtet ist, die Zuführluftströmung des ersten Leitungsabschnitt 62 in eine, der Anzahl an zweiten Leitungsabschnitten 64 entsprechende Anzahl (z.B. entsprechend der Anzahl an Dosiereinrichtungen 90 und/oder Ausbringeinrichtungen 22) an Zuführluftströmungen aufzuteilen.

Gemäß dem Ausführungsbeispiel weist das Leitungssystem 60 eine Reihe von Rohrbögen, Verengungen, Anschlussstutzen und/oder dergl. auf, in deren Bereich sich granulares Material aufbauen kann und zu Verstopfungen im Leitungssystem 60 führen kann. Um diesen entgegenzuwirken, sieht das Fördersystem 50 vor, dass das Leitungssystem 60 eine Ventileinrichtung 120 umfasst, die eingerichtet ist, die Zuführluftströmung temporär zu manipulieren. Die Ventileinrichtung 120 ist hierbei zweckmäßig dem ersten Leitungsabschnitt 62 zugeordnet.

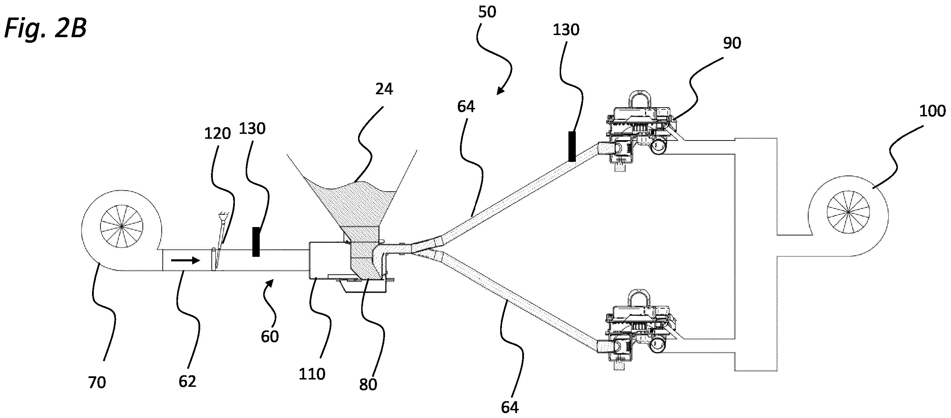

Die Ventileinrichtung 120 ist zur temporären Manipulation der Zuführluftströmung zweckmäßig dazu eingerichtet, die Zuführluftströmung temporär zu unterbrechen. Was gemäß der Figuren 2 durch eine als schließbare Klappe ausgeführte Ventileinrichtung 120 erreicht werden kann.

Um ein durch die Ventileinrichtung 120 durchgeführtes temporäres Manipulieren der Zuführluftströmung noch gezielter durchzuführen, kann gemäß dem Ausführungsbeispiel vorgesehen sein, dass das Fördersystem 50, insbesondere das Leitungssystem 60, eine Sensoreinrichtung 130 umfasst, die eingerichtet ist, ein Druckniveau der Zuführluftströmung und/oder eine Strömungsgeschwindigkeit der Zuführluftströmung im Leitungssystem 60 zu erfassen. Zudem kann vorgesehen sein, dass die Ventileinrichtung 120 mittels einer Steuereinrichtung steuer- und/oder regelbar ist, insbesondere anhand des erfassten Druckniveau und/oder der erfassten Strömungsgeschwindigkeit mittels der Steuereinrichtung steuer- und/oder regelbar ist.

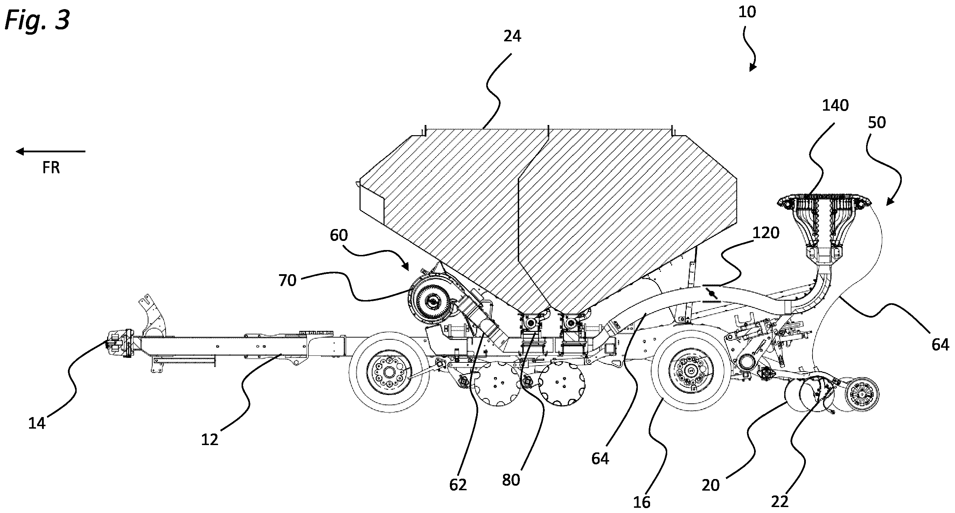

Figur 3 zeigte eine Seitenansicht einer alternativen Ausführungsvariante einer landwirtschaftlichen Verteilmaschine 10 mit einem Fördersystem 50. Die Verteilmaschine 10 ist als Sämaschine ausgebildet. Die Verteilmaschine 10 umfasst insbesondere einer Fördersystem 50 gemäß der vorliegenden Beschreibung und/oder ist eingerichtet ein Verfahren gemäß der vorliegenden Beschreibung auszuführen.

Die Verteilmaschine 10 umfasst eine Rahmenkonstruktion 12 mit einer Verbindungseinrichtung 14, zur Verbindung der Verteilmaschine 10 mit einer hier nicht dargestellten Zugmaschine (z.B. Traktor), und mit einem Fahrwerk 16. Die Rahmenkonstruktion 12 umfasst zudem in einem hinteren Bereich eine Reiheneinheit 20 die als Ausbringeinrichtung 22 dient. Die Reiheneinheit 20, respektive die Ausbringeinrichtung 22 ist als Säschar mit einem zugeordneten Saatrohr ausgeführt.

Zum Mitführen und Bereitstellen von auf einer landwirtschaftlichen Fläche (z.B. Ackerfläche) auszubringendem granularem Material umfasst die Verteilmaschine 10 zudem einen in zwei Behälter aufgeteilten Vorratsbehälter 24.

Das Fördersystem 50, respektive die Verteilmaschine 10, umfasst einen Vorratsbehälter 24 für das granulare Material sowie ein Leitungssystem 60 zum pneumatischen Fördern von aus dem Vorratsbehälter 24 entnommenem granularem Material zu Ausbringeinrichtungen 22 (z.B. Reiheneinheiten). Zur Erzeugung einer Zuführluftströmung in dem Leitungssystem 60 ist eine mit dem Leitungssystem 60 wirkverbundene Strömungserzeugungseinrichtung 70 vorgesehen.

Zur Entnahme von granularem Material aus dem Vorratsbehälter 24 sind zwei Entnahmeeinrichtungen 80 in Form von Zellenradschleusen vorgesehen. Insbesondere ist für jeden Behälter des Vorratsbehälters 24 eine Entnahmeeinrichtung 80 vorgesehen.

Zwischen der Strömungserzeugungseinrichtung 70 und der Entnahmeeinrichtung 80 ist ein erster Leitungsabschnitt 62 vorgesehen, zudem ist zwischen der Entnahmeeinrichtung und der Ausbringeinrichtung 22 (siehe Figur 2C und 2D) ein zweiter Leitungsabschnitt 64 vorgesehen. Wobei zudem im zweiten Leitungsabschnitt 64 ein Verteilerkopf 140 angeordnet ist. Der Verteilkopf 140 ist dazu eingerichtet, die Zuführluftströmung in eine, der Anzahl an Ausbringeinrichtungen 22 entsprechende Anzahl an Zuführluftströmungen aufzuteilen.

Das Leitungssystem 60, insbesondere der zweite Leitungsabschnitt 64, umfasst eine Ventileinrichtung 120, die eingerichtet ist, die Zuführluftströmung temporär zu manipulieren.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste:**

| | | | |
|---|---|---|---|
| 10 | Verteilmaschine | 64 | Zweiter Leitungsabschnitt |
| 12 | Rahmenkonstruktion | 70 | Strömungserzeugungseinrichtung |
| 14 | Verbindungseinrichtung | 80 | Entnahmeeinrichtung |
| 16 | Fahrwerk | 90 | Dosiereinrichtung |
| 18 | Querträger | 100 | Druckerzeugungseinrichtung |
| 20 | Reiheneinheit | 110 | Strömungsteiler |
| 22 | Ausbringeinrichtung | 120 | Ventileinrichtung |
| 24 | Vorratsbehälter | 130 | Sensoreinrichtung |
| 50 | Fördersystem | 140 | Verteilkopf |
| 60 | Leitungssystem | FR | Fahrtrichtung |
| 62 | Erster Leitungsabschnitt | | |

## Patentansprüche

1. Fördersystem (50) zum Fördern von auf einer landwirtschaftlichen Fläche auszubringendem granularem Material, mit einem Vorratsbehälter (24) für das granulare Material, sowie mit einem Leitungssystem (60) welches mittels einer Zuführluftströmung zum pneumatischen Fördern von dem aus dem Vorratsbehälter (24) entnommenem granularem Material zu Ausbringeinrichtungen (22) eingerichtet ist, wobei das Leitungssystem (60) mit einer Strömungserzeugungseinrichtung (70), die zur Erzeugung der Zuführluftströmung in dem Leitungssystem (60) eingerichtet ist, wirkverbunden ist, **dadurch gekennzeichnet, dass** das Leitungssystem (60) eine Ventileinrichtung (120) umfasst, die eingerichtet ist, die Zuführluftströmung temporär zu manipulieren.

2. Fördersystem (50) nach Anspruch 1, **dadurch gekennzeichnet, dass** die Ventileinrichtung (120) zur temporären Manipulation der Zuführluftströmung dazu eingerichtet ist,
- die Zuführluftströmung temporär zu unterbrechen und/oder
- den Querschnitt im Leitungssystem (60) zumindest abschnittweise um mindestens 50% oder um mindestens 75% oder um mindestens 90% zu reduzieren.

3. Fördersystem (50) nach einem der vorhergehenden Ansprüche, **dadurch gekennzeichnet, dass** die temporäre Manipulation
- in einem definierten und/oder definierbaren Zeitintervall erfolgt und/oder
- durch manuelle Vorgabe erfolgt und/oder
- Anhand von, vorzugsweise durch eine Erfassungseinrichtung vorgegebener, Betriebsdaten erfolgt.

4. Fördersystem (50) nach Anspruch 3, **dadurch gekennzeichnet, dass** die Betriebsdaten definiert sind, durch
- eine geförderte Menge an granularem Material und/oder
- einen Betriebszustand der Ausbringeinrichtungen (22) und/oder
- eine Lage einer das Fördersystem (50) aufweisenden Verteilmaschine (10) auf einer landwirtschaftlichen Fläche.

5. Fördersystem (50) nach einem der vorhergehenden Ansprüche, **dadurch gekennzeichnet, dass** die temporäre Manipulation in einer maximalen Zeitdauer von 2 Sekunden oder maximal 5 Sekunden oder maximal 20 Sekunden erfolgt.

6. Fördersystem (50) nach einem der vorhergehenden Ansprüche, **gekennzeichnet durch**, eine Sensoreinrichtung (130), die zur mittelbaren und/oder unmittelbaren Erfassung eines Druckniveau der Zuführluftströmung und/oder einer Strömungsgeschwindigkeit der Zuführluftströmung in dem Leitungssystem (60) eingerichtet ist, zudem **gekennzeichnet durch** eine Steuereinrichtung, die eingerichtet ist, die Ventileinrichtung (120) anhand des erfassten Druckniveau und/oder der Strömungsgeschwindigkeit zu steuern und/oder zu regeln.

7. Fördersystem (50) nach einem der vorhergehenden Ansprüche, **dadurch gekennzeichnet, dass** die Strömungserzeugungseinrichtung (70) eingerichtet ist, eine Strömungsgeschwindigkeit der Zuführluftströmung und/oder ein Druckniveau der Zuführluftströmung in dem Leitungssystem zu steuern und/oder zu regeln, insbesondere unabhängig von der temporären Manipulation der Zuführluftströmung zu steuern und/oder zu regeln.

8. Fördersystem (50) nach einem der vorhergehenden Ansprüche, **dadurch gekennzeichnet, dass** dem Leitungssystem (60) zur Entnahme des granularem Materials eine Entnahmeeinrichtung (80) zugeordnet ist, wobei zwischen der Strömungserzeugungseinrichtung (70) und der Entnahmeeinrichtung (80) ein erster Leitungsabschnitt (62) vorgesehen ist und wobei zwischen Entnahmeeinrichtung (80) und der Ausbringeinrichtung (22) ein zweiter Leitungsabschnitt (64) vorgesehen ist, und wobei vorzugsweise dem zweiten Leitungsabschnitt (64) eine Dosiereinrichtung (90), insbesondere eine Einzelkorndosiereinrichtung (90), zugeordnet ist.

9. Fördersystem (50) nach Anspruch 8, **dadurch gekennzeichnet, dass**
- der erste Leitungsabschnitt (62) einen zumindest um das Doppelte, bevorzugt einen zumindest um das Dreifache, größeren Querschnitt aufweist als der zweite Leitungsabschnitt (64) und/oder
- dass die Ventileinrichtung (120) dem ersten Leitungsabschnitt (62) zugeordnet ist und/oder
- dass die Ventileinrichtung (120) dem zweiten Leitungsabschnitt (64) zugeordnet ist.

10. Fördersystem (50) nach Anspruch 8 und/oder 9, **dadurch gekennzeichnet, dass** zwischen dem ersten Leitungsabschnitt (62) und dem zweiten Leitungsabschnitt (64) und/oder der Entnahmeeinrichtung (80) ein Strömungsteiler (110) angeordnet ist, der eingerichtet ist, die Zuführluftströmung des ersten Leitungsabschnitt (62) in eine, der Anzahl an zweiten Leitungsabschnitten (64) entsprechende Anzahl an Zuführluftströmungen aufzuteilen.

11. Fördersystem (50) nach einem der vorhergehenden Ansprüche, insbesondere nach Anspruch 8, **dadurch gekennzeichnet, dass** Fördersystem (50) ein Seed-on-Demand System bildet.

12. Verfahren zum Fördern von auf einer landwirtschaftlichen Fläche auszubringendem granularem Material, umfassend,
- ein pneumatisches Fördern von aus einem Vorratsbehälter (24) entnommenem granularem Material zu Ausbringeinrichtungen (22) über ein Leitungssystem (60), wobei das Leitungssystem (60) mit einer Strömungserzeugungseinrichtung (70), die zur Erzeugung einer Zuführluftströmung, zum pneumatischen Fördern des granularen Materials in dem Leitungssystem (60), eingerichtet ist, wirkverbunden ist, **gekennzeichnet durch**,
- ein temporäres Manipulieren der Zuführluftströmung in dem Leitungssystem (60) mittels einer dem Leitungssystem (60) zugeordneten Ventileinrichtung (120).

13. Verfahren nach Anspruch 12, **gekennzeichnet durch**, ein derartiges temporäres, insbesondere kurzzeitiges, Manipulieren der Zuführluftströmung mittels der Ventileinrichtung (120), dass
- eine Erhöhung eines Druckniveaus, insbesondere eines statischen Druckniveaus, in zumindest einem Abschnitt des Leitungssystem (60) erfolgt und insbesondere Verstopfungen durchbrochen werden und/oder
- eine Verringerung eines Druckniveaus, insbesondere eines statischen Druckniveaus, in zumindest einen Abschnitt des Leitungssystem (60) erfolgt, und insbesondere Anhaftungen gelöst werden.

14. Landwirtschaftliche Verteilmaschine (10), insbesondere Sämaschine und/oder pneumatischer Düngerstreuer, **dadurch gekennzeichnet, dass** diese ein Fördersystem (50) nach einem der Ansprüche 1 bis 11 aufweist und/oder dass diese eingerichtet ist, ein Verfahren nach einem der Ansprüche 12 oder 13 auszuführen.
